# EUROPEAN PATENT APPLICATION

(11) **EP 2 713 592 A1**
(43) Date of publication of application: **02.04.2014**
(21) Application number: 12306192.1
(22) Date of filing: 28.09.2012
(51) Int. Cl.: H04M 3/533

(54) **Text based change to voicemail greetings**

(71) Applicant: Orange, 75015 Paris (FR)
(72) Inventor: Sandeep Das, Reshma, London, RG1 2GW (GB); Uddin, Rafel, London, SM4 4HU (GB)

(57) **Abstract**

The present invention relates to a voicemail server for storing in a voicemail greeting database a plurality of voicemail greetings, each voicemail greeting being associated to a phone number, the voicemail server being adapted to receive a text message tagged with a phone number and a selection of a voice model; retrieve the voice model using the selection, generate a voice message using the received text message and the retrieved voice model; store in the voicemail greeting database the generated voice message as a voicemail greeting for the tagged phone number.

## Description

### FIELD OF THE PRESENT INVENTION:

The present invention generally relates to creation of voice message using Text To Speech (TTS) techniques and text based messages. It finds applications, in particular while not exclusively, in personalization of Voicemail greetings.

### BACKGROUND OF THE PRESENT INVENTION:

A voicemail is a computer based system that allows users and subscribers to exchange personal voice messages (*Wikipedia*)*.* Network Operators offer Voicemail based services to their customers or end users. Network operators associate end user to a voicemail box or account. By end user, we mean here the phone number of the end user equipment. Thus, a voicemail box is associated to a phone number. Voicemail systems offer some services to the end users or customers, referred hereafter as voicemail services.

A common service is the possibility to redirect an incoming call to the voicemail box of the end user, either because the end user is already in a call or at the end user request. In this case, the caller is redirected to a Voicemail server. A greeting message is played by the Voicemail server and after the caller may leave a message. Usually, greeting messages are defined by default by a network operator. Redirected caller are greeted by a voice message usually similar to "you have reached <*the phone number dialed*> voicemail, this number is unreachable for the moment, please leave a message after the tone".

By default, this voice message is common to all customers. A first possibility of personalization of this greeting message by the customer is usually proposed by network operators. The personalization relies on an Interactive Voice Response (IVR) server, giving the customer the possibility to personalize the greeting message by recording a voice message. The voice message is played as a greeting message when a caller is redirected to the Voicemail. Thus, the end user can define a personal greeting for its Voicemail box.

Such solution allows the customer to personalize the content of the greeting message, as the Voicemail is playing a message recorded by the customer. But the greeting played by the Voicemail is quite obviously a greeting with the customer voice (only limits would be voice imitation talent of the customer). Also, creation of the personal greeting message is a tedious operation as the customer must go through steps of an IVR system.

When a customer wants to have a personal greeting with someone else voice, typically a celebrity voice, some services exist offering such personalization. But said services are limited as they propose only pre-recorded messages with no possibility to adapt the content of the message to the customer needs.

So, there is a need to offer a method for the customer allowing creation of personal greetings, with personalized content and personalized voice. Previously described solution can only offer content personalization, via an IVR allowing the customer to record its own message, or voice personalization, via pre-recorded messages, but not at the same time both content and voice personalization.

US2008/0253538 describes a Voicemail system including logic to convert a received text message into a personal greeting using an automated voice. Indeed, US2008/0253538 allows creating a personal greeting with a personalized content and a personalized voice, but the proposed solution suffers limitations as the personalization method, especially on the automated voice selection, is a tedious operation, relying on an IVR server.

US2008/0253538 relies on Text To Speech (TTS) synthesis as to personalize the voice of the personal greeting or personal announcement. TTS synthesis is an artificial way of producing human speech. A computer system used for this purpose is called a speech synthesizer or TTS engine and can be implemented in software or hardware. A speech synthesizer, hereafter TTS engine, converts a normal language text into speech using a given voice model. A voice model contains necessary information for the TTS engine to synthesize a given voice. Voice models are generally stored in database server. Such database server is called a voice bank. Voice model for a person are generally built from voice samples from said person or acoustic models. Technique to obtain a voice model from voice samples or acoustic models is not described in this document. Using TTS synthesis, a TTS engine convert a text message to a speech message, artificially reproducing the voice associated to the voice model used by the TTS engine.

There is need today to define a method for a end user to easily and quickly configure a personal greeting with a personalized voice and speech message. Ideally, the end user should be able to obtain such result in an easy way from an user equipment such as a smartphone.

### SUMMARY OF THE PRESENT INVENTION:

It is an object of the present invention to make improvement of prior art. The present invention relates to a method to update a personal greeting of a voicemail system using text based message. Such method allows a end user possessing a voicemail box or account on a voicemail system to update easily the personal greeting. Object of the invention improves voicemail services by adding a user friendly method for the customer to personalize and update their personal greetings.

According, the present invention relates to a voicemail server storing in a voicemail greeting database a plurality of voicemail greetings according to claim 1.

The voicemail server, receiving a single message, can update a greeting message associated to a phone number thanks to the information attached to the message. This greeting message is a personalized voice message generated by a TTS engine. The TTS engine uses a text message comprised in the received message and a retrieved voice model to generate a synthesized voice message. The resulting message is then stored in the database greeting and is used as a greeting message associated to the phone number.

Thanks to the present voicemail server, a voicemail update service is available to the user through a selection of a text message and a voice model on his user equipment.

The present invention also relates to a user equipment for updating a voicemail greeting stored in a voicemail greeting database according to claim 4.

The present invention further relates to a method for updating a voicemail greeting by a voicemail server according to claim 8.

The present invention also relates to a method for updating a voicemail greeting by a user equipment according to claim 12.

The present invention also relates to a system for updating a voicemail greeting according to claim 15.

### BRIEF DESCRIPTION OF THE DRAWINGS:

The present invention is illustrated by way of example, and not by way of limitation, in the figures of the accompanying drawings, in which like reference numerals refer to similar elements and in which:
   - FIG. 1 represents a system according to some embodiments of the invention;
   - FIG. 2 shows an illustrative process flow diagram in accordance with an embodiment of the present invention and system as seen in FIG. 1;
   - FIG. 3 represents an exemplary embodiment of a GUI for the application 101, more precisely an interface to update a personal greeting;
   - FIG. 4 represents an exemplary embodiment of a GUI for the application 101, more precisely an interface to select a voice models among a list of voice models;
   - FIG. 5 represents an exemplary embodiment of a GUI for the application 101, more precisely an interface to select and add voice models to the plurality of voice models associated to a phone number.

### DETAILED DESCRIPTION:

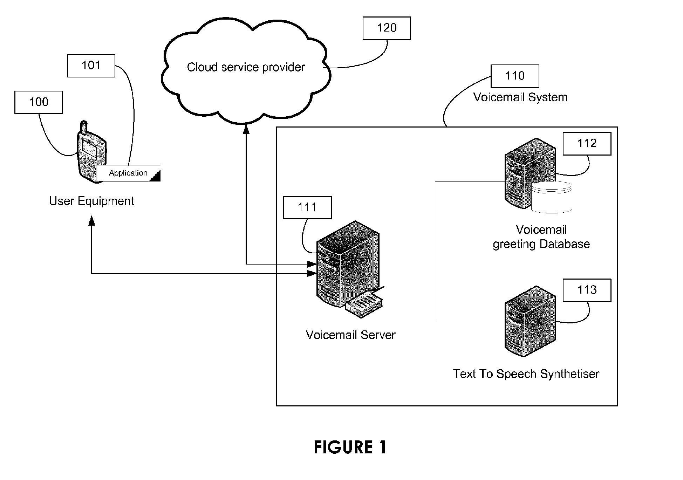

Figure 1 is an illustration of an exemplary voicemail system 110 described in the present invention. The voicemail system 110 comprises a voicemail server 111, a voicemail greetings database server 112 (voicemail database in short) and a Text To Speech (TTS) synthesizer server 113. In the exemplary voicemail system represented in FIG. 1, the three servers 111, 112 and 113 are represented as three separated servers, but it is known to the man skilled in the art that these three servers may also be seen as three functions, executed on a same server or executed on a cloud structure.

The voicemail greetings database server 112 stores at least a plurality of voicemail greetings, each voicemail greeting being associated to a phone number and a plurality of voice models associated to said phone number. One may note that the voice models may actually be stored on the voicemail database 112. Alternatively, an identifier (like a link, a reference number, a pointer or else) may be stored in association with the phone number, the actual voice models being stored e.g. with the TTS synthesizer 113, and retrievable through the identifier.

The Text To Speech (TTS) synthesizer server comprises means to execute TTS engines. Such TTS engines can produce artificial human speech using a voice model and a text message. The voicemail server 111 is arranged to communicate with the voicemail greetings database server 112 and the TTS synthesizer server 113 so as to generate voicemail greetings using a text message and a voice model provided to the TTS synthesizer server 113, as explained here after. The generated voicemail greetings may be subsequently stored in the voicemail database 112 in association with a phone number.

The voicemail server is also arranged to communicate with a user equipment 100, and possibly a cloud service provider 120, for instance to add more voice models to the plurality of voice models accessible to the user equipment. Especially, the voicemail server 111 is arranged to:
- receive a text message from the user equipment 100 and tagged with a phone number and a selection of a voice model;
- retrieve e.g. from the voicemail greeting database 112 the voice model using the selection;
- generate a voice message using the received text message and retrieved voice model;
- store in the voicemail greeting database 112 the generated voice message as a voicemail greeting for the tagged phone number.

The selection of the voice model may comprise the identifier mentioned here above, the voicemail server using this identifier to retrieve the selected voice model.

The phone number is typically associated to the user equipment 100. To generate the voice message, the voicemail server 111 sends to the TTS synthesizer server 113 the received text message and the retrieved voice model. TTS synthesizer 113 uses the received text message and voice model as input for a TTS engine. TTS synthesizer 113 then sends back the voice message to the voicemail server 111, or may directly store in the voicemail greeting database 112 the generated voice message as a voicemail greeting for the tagged phone number. As noted before, TTS synthesizer function can also be a function of the voicemail server 111, in this case, TTS engines are executed on the voicemail server 111.

Voicemail system 110 is typically hosted by a network operator. User equipment 100 typically belongs to a customer of said network operator. As known, the network operator associates a phone number to the user equipment 100, allowing this user equipment 100 to place or receive calls. User equipment 100 is typically a mobile phone, smartphone or a tablet, or any electronic devices that could be associated to a phone number and able to place or receive voice calls. In order to use the method of the present invention described hereafter, the user equipment 100 can communicate with the voicemail server 111 via existing services like SMS or USSD.

In the present system, both the voicemail server 111 and the user equipment 100 may have access to and use the same plurality of voice models, for instance through period or triggered synchronization or updates. This allows, for instance, the voicemail server 111 to know which new voice models the user equipment may acquire through the exemplary interface 5 as described here after. This further allows the voicemail server 111 to discover new voice models the user may generate with his user equipment. The synchronization may comprise the exchange of the voice model itself or an identifier (like a pointer, link ...) so that the voicemail server and/or TTS synthesizer 113 may retrieve the corresponding voice model.

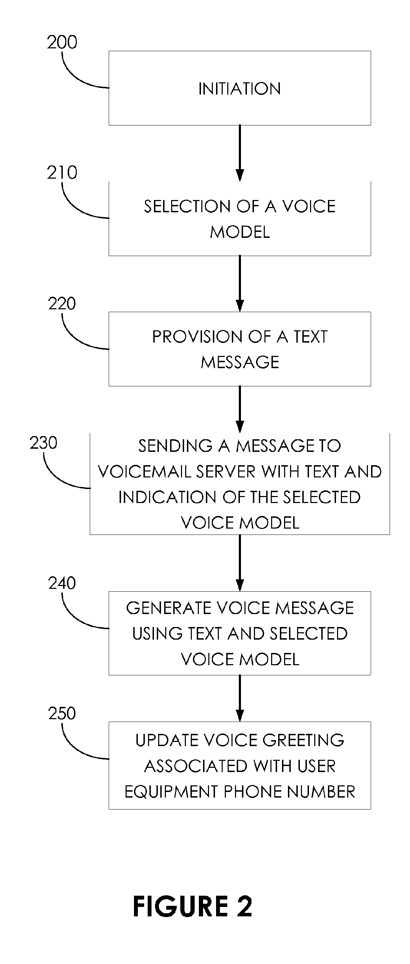

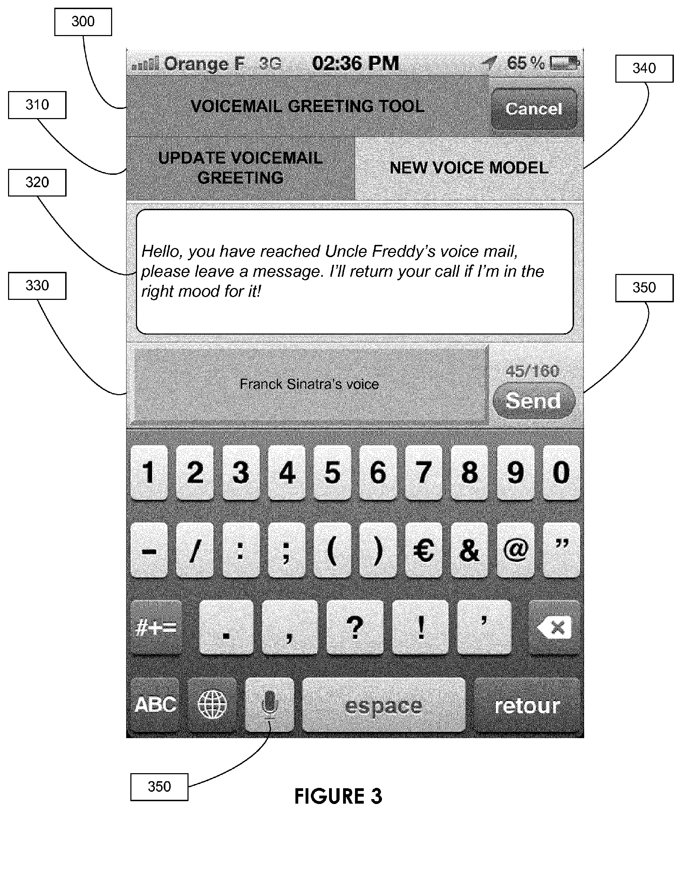

In an additional embodiment of the present system, an application 101 is installed on the user equipment 100 to facilitate the interaction of the end user or customer with the present voicemail update service. The application 101 may be pre-installed on the user equipment 100, notably by the network operator. The application 101 may also be downloaded and installed by the customer. In this case, the application 101 can be downloaded from a third party provider like "Google Play Store™" or "Apple Appstore™", or directly from a download center provided by the network operator like "Orange Applications™". The present application 101 is especially configured to:
- receive or capture a user input for selection of a voice model among the plurality of voice models accessible to the user equipment;
- receive or capture a text message to update the voicemail greeting associated to the phone number of the user equipment, e.g. through the graphical user interface (GUI) of FIG. 3;
- send a message to the voicemail server comprising the captured text message and the selection of the voice model, for subsequent update in the voicemail greeting database of the voicemail greeting associated to the phone number using the voice model of the selection and the message. The update will be carried out by the voicemail server 111 as described here after in relation with FIG.2. The message sent to the voice model will be tagged with the phone number of the user equipment 100;
- receive a list of voice models. This may happen for instance when the user equipment 100 accesses the cloud service provide 120 to search for additional voice models;
- receive a user selection of voice model among the list of voice models. With the received list of voice models, the user may proceed with selecting (like purchasing) voice models;
- send the user selection of voice models to the voicemail server for subsequent update of the plurality of voice models associated to the user equipment phone number. Such a function is part of the synchronization or updates mentioned earlier so that the both the user equipment and the voicemail server can use and have access to the same plurality of voice models;
- send to the voicemail server a list of voice models associated to the user equipment phone number. This may be the case when the user generates new voice models locally and send the list of new voice models to the voicemail server 111.

Exemplary embodiment of said the application 101 functions and exemplary Graphical User Interfaces (GUIs) are described hereafter, notably in FIG. 3, FIG. 4 and FIG. 5.

In one embodiment of present invention, the voicemail server can access a provider, like cloud service provider 120 mentioned before. From such a cloud service provider, the voicemail server 111 can retrieve for example additional voice models. In another exemplary embodiment, the user equipment 100 can also directly access the cloud service provider 120 to retrieve for example more voice models to enrich the user experience, as explained here after. The cloud service provider 120 may be operated by the network operator or by an external provider.

Fig. 2 shows an illustrative process flow diagram in accordance with an embodiment of the present invention and system as seen in FIG. 1.

During the first step 200, or initiation step, the end user or customer will set up the present voicemail service. The network operator may offer a default set up of the service, so in one example, the end user does not need to configure, install or parameter anything on the user equipment 100, as it is the case for example if the network operator pre-downloaded and configured the application 101 previously discussed. In other case, the end user needs to download and install the application 101, and possibly configure this application 101. That is the case for example, if the end user is using a voice system different from the one provided by the network operator (the phone number of the voicemail system should be defined). Initiation of the system comprises for example activating the voicemail service as it may be turned off by default by the network operator, defining the rules of activation of the service, that is to say for example redirection of incoming calls to the voicemail service when the end user is already in a call, unreachable, during certain hours, when the call is refused by the end user or any other criteria.

Also, a first personal greeting may be configured, to change from the default personal greeting defined by the network operator. In order to do so, the end user may call an IVR or use an application, possibly the present application 101, to record some voice samples. Indeed, using these voice samples, the voicemail system or the user equipment can build a voice model adapted to the voice of the end user. Such process is known to the man skilled in the art. The end user may e.g. want to create different voice models adapted to his voice, for example by building a voice model when speaking French, English or any other languages, voice model to be used according to the present invention. Such voice models would be adapted to the end user voice and to a certain language. These voice models are stored in a voicemail database server 112 in association with the phone number of the end user, just like any other voice models available to the user equipment to implement the present voicemail update service.

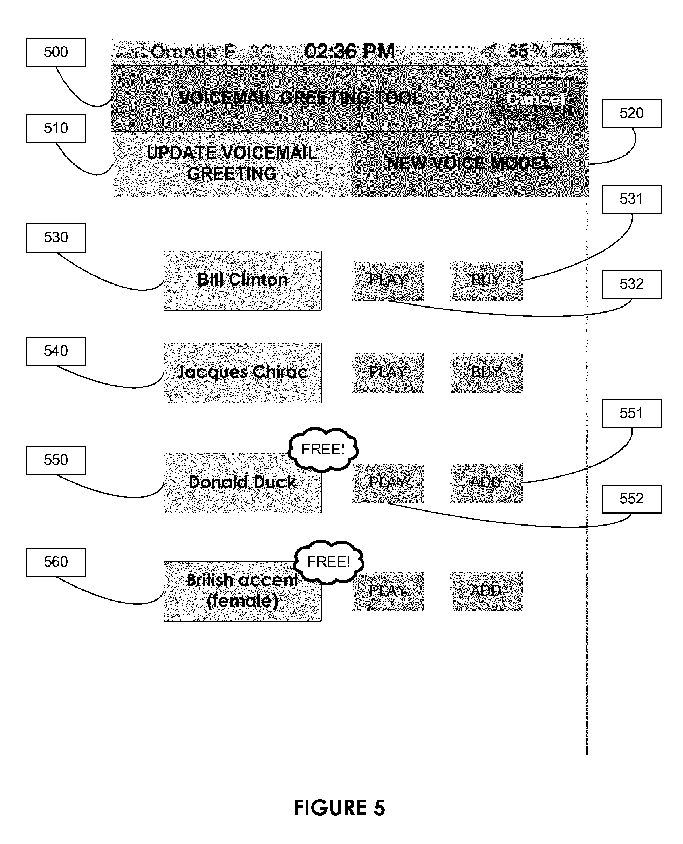

Indeed, the end user may also use the application 101 to add some voice models as described in FIG. 5. The end user may select among possible voice models which ones he wants to use. As seen before, the user equipment 100 is arranged to receive a list of voice models, possibly coming from the network operator or a cloud service provider 120 and that will be displayed to the user through e.g. the GUI of FIG. 5. The user equipment 100 is also arranged to receive the end user selection of a voice model among the list of voice models and send the selection of voice models to the voicemail server 111 for subsequent update of the plurality of voice models associated to the user equipment phone number. Thanks to this update, the voicemail server 111 can subsequently identify a voice model associated to text message and a phone number, as sent by the application 101 and explained here after.

Such a functionality may be implemented through the application 101, offering a GUI as seen in FIG. 5, to facilitate end user interaction with the voicemail server 111.

In the following description of FIG. 2, focus is made on the use of an application 101. Other embodiment of the present invention may rely on interaction between the user equipment 100 and the voicemail server 111 based on SMS or USSD techniques. Application 101 may rely on such SMS or USSD messages in the back end to communicate with the voicemail server 111. Application 101 may alternatively use web technologies to communicate with the voicemail server 111. Application 101 could be a launcher for an Uniform Resource Locator (URL) leading to a website, this website offering an interface to interact with the voicemail server 111. The voicemail server 111 may comprise a web server to host such website.

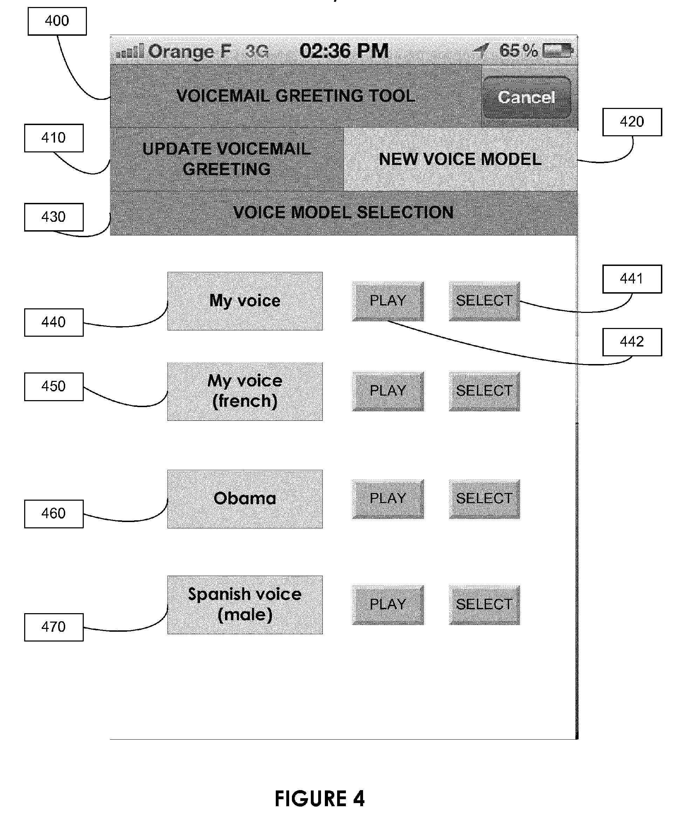

In step 210, the end user executes the application 101 on the user equipment 100 to start the present voicemail update service. An interface similar to the interface proposed in FIG. 3 may be presented to the end user. In this step 210, the end user may select a voice model to be used. Selection of the voice model is made through the selectable element or button 330. By interacting with the button 330, by pressing or touching the button for example, the application 101 interface changes to another interface offering a voice model selection interface. An example of such interface is presented in FIG. 4.

As seen in FIG.4, a banner 430 informs the end user that the interface has switched to the voice model selection interface. In the exemplary embodiment of FIG. 4, the end user previously associated during the initiation step 200 four voice models to its phone number: "My voice" 440, "My voice (French)" 450, "Franck Sinatra" 460 and "Spanish voice (male)" 470. Interface shown in FIG. 4 offers the end users possibility of playing a sample of each voice model (button "play" 442 for example) and a button to select a given voice model (button "select" 441 for example). When the end user selects a given voice model, for instance here "Franck Sinatra", the interface goes back to interface shown in FIG. 3 and may present -embedded in button 330 or elsewhere - the name of the voice model selected by the end user, here "Franck Sinatra" 460.

The voice models accessible to the user equipment may be stored in the user equipment through a user profile, which can be accessed by application 101 to propose a list of available voice models (GUI of FIG. 4 showing the list after pressing the selectable element 330 of FIG. 3). Alternatively, when application 101 switches to selection GUI of FIG. 4, the list of available voice models may be retrieved from the voicemail database 112, where they may be tagged in association with the user equipment phone number.

In a further step 220, after switching back to the GUI of FIG. 3, the end user may enter in the text zone 320 the text message that will be used to create the personal voicemail greeting message in the present method. Such a text message can be entered or keyed in by the end user in a similar way as a SMS is keyed on the user equipment, for example using predictive text as "T9™". Optionally, the end user may press the button 350 as to use Automatic Speech Recognition technique. In this case, the end user dictates a message that is automatically retranscribed as a text in the text zone 320.

The order in which step 210 (selection of a voice model) and step 220 (provision of the text message) are performed is unimportant as the end user may choose one or the other first ... The end user may even begin by keying a text message, press the button 330 as to select a voice model and then go back to keying the text message, completing the already entered text message, the application keeping a memory of the previously entered message.

In an additional step 230, when the end user has completed entering the text message and has selected a voice model according to its preference, the end user will press the send button 350 as to confirm his choice of text and voice model to the voicemail system.

When confirmation is given by pressing button 350, the application 101 sends the voicemail system 110 (here the voicemail server 111) a message comprising the text message (entered in 320) tagged with the phone number associated with the user equipment and the selected voice model to.

The application 101 may send the message to the voicemail server 111 in a SMS, via USSD, via a HTTP POST method or any other techniques. When relying on SMS, such an SMS may be generated according to a certain format so as to convey both the text message and selected voice model. Selected voice model can be tagged using a special format, for example between brackets. Using the example shown in FIG. 3, the application 101 may send the following SMS to the voicemail server 111:
<*Franck Sinatra*> *Hello, you have reached Uncle Freddy's voicemail, please leave a message. I'll return your call if I'm in the right mood for it!*

Voicemail server 111 can recognize in the SMS that "Franck Sinatra" is the name of the selected voice model, while "Hello, you have reached Uncle Freddy's voicemail, please leave a message. I'll return your call if I'm in the right mood for it!" is the text message.

In this exemplary embodiment of a SMS carrier, the associated phone number can be retrieved from the originating phone number of the SMS.

In an additional step 240, the voicemail server 111 receives the sent message, i.e. the text message tagged with the user equipment phone number and the selection of a voice model. The voicemail server 111 may retrieve from the voicemail greeting database 112 the voice model corresponding to the selection among the voice models previously associated to the tagged phone number.

In an alternative embodiment of the present method, the selection may comprise an identifier of the voice model as explained before.

The voicemail server 111 then generates a voice message using the received text message and the retrieved voice model. In order to generate such voice message, the voicemail server 111 may send relevant information to a Text To Speech synthesizer server 113, or executes directly a text To Speech engine. With the received text message and the selection of the voice model (corresponding for instance to the identifier), the TTS engine or the TTS synthesizer server will generate a voice message used subsequently as an updated voicemail greetings for the phone number.

Using example of FIG. 3, the voice message would be a synthesized Franck Sinatra's voice saying "Hello, you have reached Uncle Freddy's voicemail, please leave a message. I'll return your call if I'm in the right mood for it!".

In a final step 250, the voicemail server 111 updates the personal greeting of the end user with the newly generated voice message. The voicemail server 111 stores in the voicemail greeting database server 112 the generated voice message. This generated voice message is used as personal greeting for the tagged phone number, that is to say for the end user using the user equipment associated with the phone number. When a caller will be redirected to the voicemail box of this end user, the voicemail server 111 will welcome the caller by playing the personal greeting of the end user, in other words, the voice message generated in step 240.

A feedback may be returned to the user equipment 100 as to inform that operations described in steps 240 and 250 were successful. In such case, application 101 may display a message on the GUI informing the end user that personal greeting has been successfully updated by the voicemail server 111.

FIG. 3 represents an exemplary embodiment of a GUI for the application 101. FIG. 3 has been mostly described before. Banners 300 and 310 inform the end user that FIG. 2 GUI is an interface to update their personal greeting. Banners 310 and 340 may be selectable elements or buttons, allowing the end user to press or select button 340 to switch to the interface to select new voice models, that is to say the interface presented in FIG. 5. As described before, by interacting with the button 330, by pressing or touching the button for example, the application 101 interface changes to another interface offering a voice model selection interface. An example of such interface is presented in FIG. 4

FIG. 4 represents an exemplary embodiment of a GUI for the application 101, more precisely another interface offering a voice model selection. Banners 400, 410 and 420 are similar respectively to banners 300, 310 and 340. Banner 430 gives an indication to the end user that the application has switched to the voice model selection interface. In this interface, the voice models associated with the end user phone number are displayed (440, 450, 460 and 470). These voice models may be retrieved from the voicemail database server 112, as said voicemail database server 112 stores the voice models associated to a phone number. Alternatively, they may be retrieved through a user profile for the application and stored in the user equipment. When a end user selects a voice model, for instance by pressing or pushing the button 441, the interface will switch back to the interface shown in FIG. 3, replacing the voice model name displayed in 330 by the name of the newly selected voice model.

FIG. 5 represents an exemplary embodiment of a GUI for the application 101 when the end user selects the button, selectable element or banner 340, 420. A change of the color of the banner 520 indicates to the end user that the interface has switched to the interface allowing addition of new voice models to its voicemail account or box, meaning here associating new voice models to the end user phone number. Similarly to FIG. 4, a list of available voice models is displayed in the interface, for instance 530, 540, 550 and 560. These voice models may be provided by the network operator or by a cloud service provider 120. The application 101 can receive the list of voice models from the voicemail database sever 112 or a cloud service provider 120.

The interface allows the end user to listen to a sample of each voice model by selecting a "play" button, for instance 532 and 552. The end user may add a new voice model to its voicemail account or box, meaning he can associate a new voice model to the phone number of its user equipment, by selecting either the "buy" 531 or "add" 551 buttons. The application 101 is able to receive the end user selection of voice models among the list of voice models and send the user selection of voice models to the voicemail server for subsequent update of the plurality of voice models associated to the end user equipment phone number.

In another embodiment of present invention, the end user may manage the voice models on the user equipment via the application 101 and then send to the voicemail greeting database a list of voice models associated to the end user equipment phone number. By managing on the user equipment, it should be understood that voice models can be created, downloaded or shared with a second end user equipment on the first user equipment and then uploaded to the voicemail database server 112.

## Claims

1. A voicemail server for storing in a voicemail greeting database a plurality of voicemail greetings, each voicemail greeting being associated to a phone number, the voicemail server being adapted to:
- receive a text message tagged with a phone number and a selection of a voice model;
- retrieve the voice model using the selection;
- generate a voice message using the received text message and the retrieved voice model;
- store in the voicemail greeting database the generated voice message as a voicemail greeting for the tagged phone number.

2. A voicemail server according to claim 1, the selection of a voice model comprising an identifier of the voice model, the voicemail server being further arranged to retrieve the voice model using the identifier.

3. A voicemail server according to one of the previous claims, wherein a plurality of voice models is associated to the phone number in the voicemail greeting database, the voicemail server being further arranged to:
- receive a list of voice models tagged with a phone number;
- add the received list of voice models to the plurality of voice models associated to the phone number.

4. A user equipment for updating a voicemail greeting stored in a voicemail greeting database managed by a voicemail server, the voicemail greeting database comprising a plurality of voicemail greetings, each voicemail greeting being associated to a phone number, the user equipment having access to a plurality of voice models and being adapted to:
- capture a text message to update the voicemail greeting associated to the user equipment;
- capture selection of a voice model among the plurality of voice models;
- send a message to the voicemail server comprising the captured text message and the selection of the voice model, the message being tagged with the user equipment phone number for subsequent update in the voicemail greeting database of the voicemail greeting associated to the phone number using the voice model of the selection and the text message.

5. A user equipment according to claim 4, the user equipment being further arranged to send an identifier of the voice model as the selection of the voice model, so that the voice model may retrieve the voice model using the identifier.

6. A user equipment according to one of the previous claims 4 and 5, the plurality of voice models being associated to the phone number in the voicemail greeting database, the user equipment being further arranged to:
- send to the voicemail server a list of voice models associated to the user equipment phone number for subsequent update of the plurality of voice models associated to the user equipment phone number with the user selection of voice models.

7. A user equipment according to one of the previous claim 6, further arranged to, prior to the sending of the list of voice models:
- receive a initial list of voice models;
- receive a user selection of one or more voice models among the initial list of voice models;
the sent list of voice models comprising the user selection of one or more voice models.

8. A method for storing in a voicemail greeting database a plurality of voicemail greetings, each voicemail greeting being associated to a phone number, the method being carried out by a voicemail server and comprising:
- receiving a text message tagged with a phone number and a selection of a voice model;
- retrieving the voice model using the selection;
- generating a voice message using the received text message and the retrieved voice model;
- storing in the voicemail greeting database the generated voice message as a voicemail greeting for the tagged phone number.

9. A method according to previous claim 8, the selection of a voice model comprising an identifier of the voice model, the retrieving further comprising retrieving the voice model using the identifier.

10. A method according to one of the previous claims 8 and 9, wherein a plurality of voice models is associated to the phone number in the voicemail greeting database, the method further comprising:
- receiving a list of voice models tagged with a phone number;
- adding the received list of voice models to the plurality of voice models associated to the phone number.

11. An application program embodied on a computer readable medium and arranged to update a voicemail greeting according to the method of claims 8 to 10.

12. A method for updating a voicemail greeting stored in a voicemail database managed by a voicemail server, the voicemail greeting database comprising a plurality of voicemail greetings, each voicemail greeting being associated to a phone number, the method being carried out by a user equipment having access to a plurality of voice models and comprising:
- capturing a text message to update the voicemail greeting associated to the user equipment;
- capturing selection of a voice model among the plurality of voice models;
- sending a message to the voicemail server comprising the captured text message and the selection of the voice model, the message being tagged with the user equipment phone number for subsequent update in the voicemail greeting database of the voicemail greeting associated to the phone number using the voice model of the selection and the text message.

13. The method according to the previous claim 12, further comprising:
- sending an identifier of the voice model as the selection of the voice model, so that the voice model may retrieve the voice model using the identifier.

14. An application program embodied on a computer readable medium and arranged to update a voicemail greeting according to the method of claims 12 to 13.

15. A system for updating a voicemail greeting for a user equipment, the system comprising:
- a voicemail database comprising a plurality of voicemail greetings, each voicemail greeting being associated to a phone number;
- a user equipment having access to a plurality of voice models and being adapted to:
- capture a text message to update the voicemail greeting associated to the user equipment;
- capture selection of a voice model among the plurality of voice models;
- send a message to a voicemail server comprising the captured text message and the selection of the voice model, the message being tagged with the user equipment phone number;
- a voicemail server, adapted to:
- receive the message;
- retrieve the voice model using the selection;
- generate a voice message using the received text message and the retrieved voice model;
- store in the voicemail greeting database the generated voice message as a voicemail greeting for the tagged phone number.
